# EUROPÄISCHE PATENTSCHRIFT

(11) **EP 0 458 042 B1**
(45) Veröffentlichungstag und Bekanntmachung des Hinweises auf die Patenterteilung: **02.02.1994**
(21) Anmeldenummer: 91105223.1
(22) Anmeldetag: 02.04.1991
(51) Int. Cl.: A47B 13/02

(54) **Verbindungseinrichtung**
Connection device
Dispositif de raccordement

(30) Priorität: 22.05.1990 DE 4016486
(43) Veröffentlichungstag der Anmeldung: 27.11.1991
(73) Patentinhaber: Wilkhahn Wilkening + Hahne GmbH + Co., D-31848 Bad Münder (DE)
(72) Erfinder: Rubner, Karl-Heinz, W-7320 Göppingen (DE)
(74) Vertreter: Tetzner, Volkmar, Dr.-Ing. Dr. jur.

(56) Entgegenhaltungen:
- DE-U- 8 712 124
- FR-A- 2 082 147
- GB-A- 237 991

## Beschreibung

Die Erfindung betrifft eine Verbindungseinrichtung zwischen dem oberen Ende eines Tischbeines und wenigstens einer Tischplatte zum Zusammenbau eines Tisches.

Tische können - wie aus der Praxis hinreichend bekannt - in der Weise zusammengebaut sein, daß die Tischbeine durch Zargenverbindungen oder dergleichen fest mit einem Tischrahmen verbunden, insbesondere verleimt sind und daß auf dem so gebildeten Tischrahmen zumindest eine zugehörige Tischplatte angebracht ist. Ferner ist es aus der Praxis bekannt, die Tischbeine bei hinreichend stabilen Tischplatten unter Verwendung von gesonderten Verbindungseinrichtungen direkt an der Unterseite der Tischplatten anzuschrauben. Eine Verbindungseinrichtung für den zuletzt genannten Fall ist beispielsweise aus dem DE-Gebrauchsmuster 87 12 124 bekannt. Hier weist die einstückig ausgeführte Verbindungseinrichtung die Form eines Pyramiden- oder Kegelstumpfes auf, wobei sie eine senkrecht verlaufende Aussparung zur festen Aufnahme des Tischbeines sowie eine obere Tragfläche aufweist, durch die sie mitsamt dem Tischbein an die Unterseite wenigstens einer Tischplatte angeschraubt werden kann. Wenn mit Hilfe eines so hergestellten Einzeltisches ein größerer Konferenz- oder Besprechungstisch zusammengebaut werden soll, dann kann das bei dieser bekannten Ausführung so geschehen, daß die Tischbeine im Bereich aneinanderstoßender Tischplatten so angeordnet werden, daß die Tragflächen ihrer Verbindungseinrichtungen etwa je zur Hälfte unter den benachbarten, gegenüberliegenden Randbereichen zweier Tischplatten angeschraubt werden.

Der Erfindung liegt nun die Aufgabe zugrunde, eine Verbindungseinrichtung der im Oberbegriff des Anspruches 1 vorausgesetzten Art zu schaffen, die auf relativ einfache Weise ein äußerst rasches und stabiles Verbinden eines Tischbeines mit wenigstens einer Tischplatte sowie ein im Bedarfsfalle ebenso rasches Wiederaufheben dieser Verbindung gestattet.

Diese Aufgabe wird erfindungsgemäß durch die im Kennzeichen des Anspruches 1 angegebenen Merkmale gelöst. Dabei sind vorteilhafte Ausgestaltungen und Weiterbildungen dieser Erfindung in den Unteransprüchen angeführt.

Für eine lösbare und arretierbare Ausbildung enthält die erfindungsgemäße Verbindungseinrichtung einen stirnseitig am oberen Ende eines Tischbeines befestigbarer ersten Verbindungsteil, der mehrere symmetrisch zueinander angeordnete, senkrecht nach oben vorstehende Spannbolzen mit an ihren freien Enden ausgebildeten Köpfen aufweist, sowie einen an der Unterseite einer Tischplatte anzuordnenden zweiten Verbindungsteil, der eine an der Unterseite der Tischplatte befestigbare Zargenplatte sowie eine flach (flächig) auf dieser Zargenplatte angeordnete Spannverschlußplatte enthält, die relativ zur Zargenplatte um eine vertikale Achse zwischen ersten, Freigabestellung und einer zweiten, Arretierungsstellung begrenzt drehbar ist. Die Zargenplatte besitzt dabei mehrere in ihrer Größe, Anzahl und Verteilung den Spannbolzen und den Spannbolzenköpfen des ersten Verbindungsteiles angepaßte Durchgangsbohrungen, während die Spannverschlußplatte an ihrem Umfang mehrere im Bereich über den Durchgangsbohrungen der Zargenplatte vorgesehene, klauenartige Aufnahmeöffnungen aufweist. Die Ausbildung, Formgebung und Zusammenordnung der Spannbolzen bzw. Spannbolzenköpfe des ersten Verbindungsteiles einerseits und der Durchgangsbohrungen der Zargenplatte sowie der Aufnahmeöffnungen der Spannverschlußplatte andererseits sind dabei derart, daß wenigstens einige Spannbolzenköpfe des ersten Verbindungsteiles durch die Durchgangsbohrungen hindurch in die Aufnahmeöffnungen der Spannverschlußplatte frei eingeführt und herausgezogen werden können, wenn sich die Spannverschlußplatte in ihrer Freigabestellung befindet, und daß die in diese Aufnahmeöffnungen eingeführten Spannbolzenköpfe in der Arretierungsstellung der Spannverschlußplatte von dieser letzteren ergriffen und arretiert sind, wodurch der erste Verbindungsteil mit dem zweiten Verbindungsteil fest verspannt ist. Wenn demgemäß der erste Verbindungsteil am oberen Ende eines Tischbeines und der zweite Verbindungsteil entsprechend an der Unterseite einer Tischplatte befestigt ist, dann kann auf diese Weise ein Tischbein äußerst rasch, stabil und zuverlässig mit der Unterseite wenigstens einer Tischplatte verspannt und verbunden werden, wobei diese Verbindung lediglich durch eine einfache Drehbewegung der Spannverschlußplatte in ihre Freigabestellung ebenso rasch wieder aufgehoben bzw. gelöst werden kann. Dabei versteht es sich von selbst, daß zum Zusammenbau eines kompletten Tisches die erforderliche Anzahl von entsprechend verteilt angeordneten Tischbeinen unter wenigstens Tischplatte in der genannten Weise befestigt werden kann.

Diese erfindungsgemäße Verbindungseinrichtung stellt dabei eine äußerst vorteilhafte technische Voraussetzung zur Schaffung einer sehr vielfältig variablen Tischzusammenordnung dar, d. h. es läßt sich auf die genannte Weise ein Tisch sowohl aus nur einer einzigen Tischplatte als auch aus mehreren - z. B. nach Art eines Baukastensystems - entsprechend zusammengeordneten Tischplatten mit der erforderlichen Anzahl von Tischbeinen zusammenbauen. Hierfür wird es dann zweckmäßig und besonders vorteilhaft sein, Tischplatten mit rechteckiger Tischplatte, vorzugsweise nach einem baukastenartig verwendbaren Grundraster (z. B. 90 x 180 cm) vorzusehen und in allen Eckbereichen an der Unterseite jeder Tischplatte gleichartige zweite Verbindungsteile in genau gleicher Weise und mit aufeinander sowie auf die ersten Verbindungsteile abgestimmten Abstandsverhältnissen zu den jeweiligen Tischplattenkanten anzuordnen. Die zweiten Verbindungsteile können dabei generell in jeder geeigneten Weise an der Unterseite der zugehörigen Tischplatte befestigt, vorzugsweise angeschraubt werden, wobei es jedoch besonders zweckmäßig und vorteilhaft ist, diese zweiten Verbindungsteile genau bündig und passend in dafür vorgesehene Ausfräsungen einzubauen.

Wenn in diesem Sinne beispielsweise ein Tisch aus zwei mit ihren gegenüberliegenden Kanten stumpf aneinanderstoßenden Tischplatten und aus mehreren in den Tischplatten-Eckbereichen anzuordnenden Tischbeinen zusammengebaut wird, dann erweist sich eine Ausführung jeder Verbindungseinrichtung im Sinne der Merkmale des Anspruches 12 als besonders vorteilhaft. Auf diese Weise wird es im allgemeinen genügen, die stumpf aneinanderstoßenden Rechteckseiten der beiden Tischplatten durch nur zwei Tischbeine abzustützen, von denen je eines in zwei einander gegenüberliegenden benachbarten Eckbereichen angeordnet ist, wobei dann von ein und demselben Tischbein zwei Spannbolzen des ersten Verbindungsteiles im zweiten Verbindungsteil am Eckbereich der einen Tischplatte und die beiden anderen Spannbolzen dieses ersten Verbindungsteiles im zweiten Verbindungsteil am Eckbereich der benachbarten anderen Tischplatte lösbar verspannt sind. Diese erfindungsgemäße Verbindungseinrichtung dient dann also gleichzeitig einerseits der lösbaren, stabilen Verbindung zwischen jeder der beiden Tischplatten mit diesem Tischbein und andererseits der ebenfalls lösbaren, stabilen Verbindung zwischen diesen beiden Tischplatten untereinander.

Der in der zuvor erläuterten Weise mit wenigstens zwei Tischplatten zusammengebaute Tisch läßt sich dann wiederum auf äußerst einfache Weise und sehr rasch im Bedarfsfalle in einen kleineren Tisch mit nur einer einzigen Tischplatte verwandeln, indem die beiden im Verbindungsbereich der zwei Tischplatten vorgesehenen Tischbeine zunächst gelöst und dann nur dem jeweils zugehörigen Eckbereich der einen Tischplatte zugeordnet werden, wobei dann alle vier Spannbolzen am ersten Verbindungsteil jedes Tischbeines in den entsprechenden vier Durchgangsbohrungen und Aufnahmeöffnungen aufgenommen und verspannt werden.

Die Erfindung sei nachfolgend anhand der Zeichnung näher erläutert. In dieser Zeichnung zeigen
- Fig.1: eine auseinandergezogene Perspektivansicht von einem unteren Eckbereich eines Tisches, wobei die erfindungsgemäße Verbindungseinrichtung zwischen einem Tischbein und dem Tischplatteneckbereich im gelösten Zustand veranschaulicht sind;
- Fig.2: eine Schnittansicht (Schnittführung etwa gemäß Linie II-II in Fig.3) eines an der Unterseite der Tischplatte befestigten zweiten Verbindungsteiles mit verriegeltem Tischbein;
- Fig.3: eine Aufsicht auf den zweiten Verbindungsteil, etwa entsprechend der Linie III-III in Fig.2;
- Fig.4: eine Detail-Schnittansicht entlang der Linie IV-IV in Fig.3;
- Fig.5: eine Teilansicht eines aus wenigstens zwei Tischplatten zusammengebauten Tisches im Bereich der Stoßverbindungsstelle zwischen den beiden Tischplatten und einem gemeinsam mit diesen beiden Tischplatten durch die Verbindungseinrichtung verbundenen Tischbein.

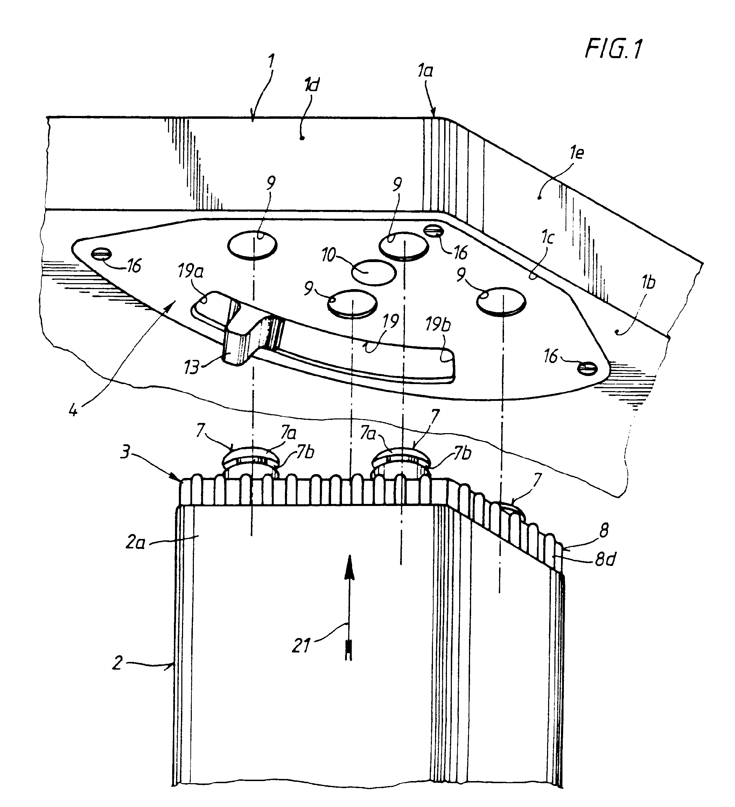

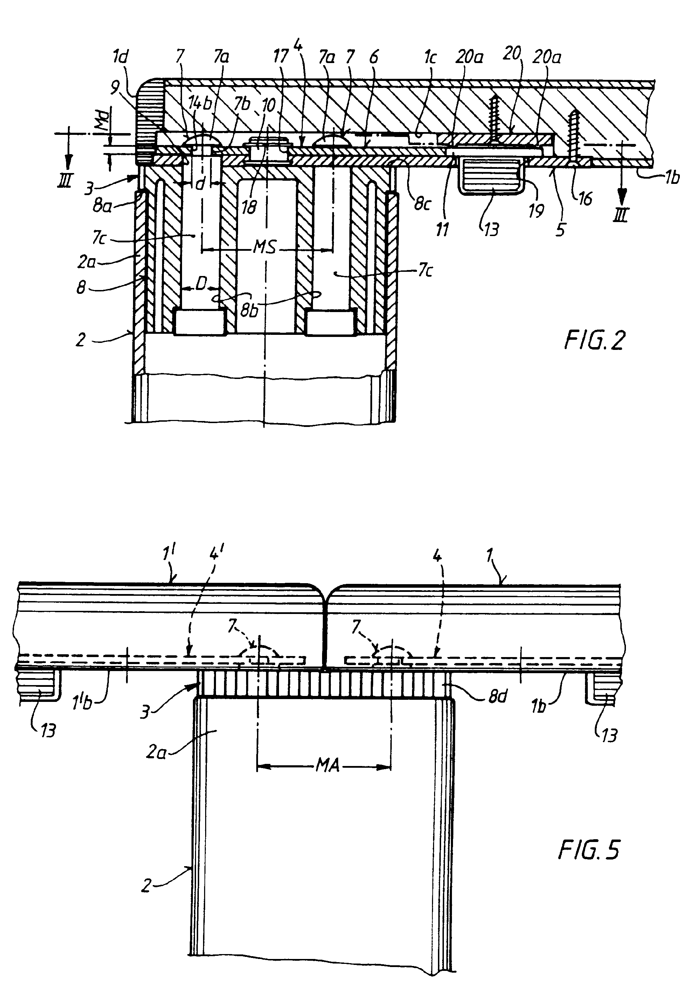

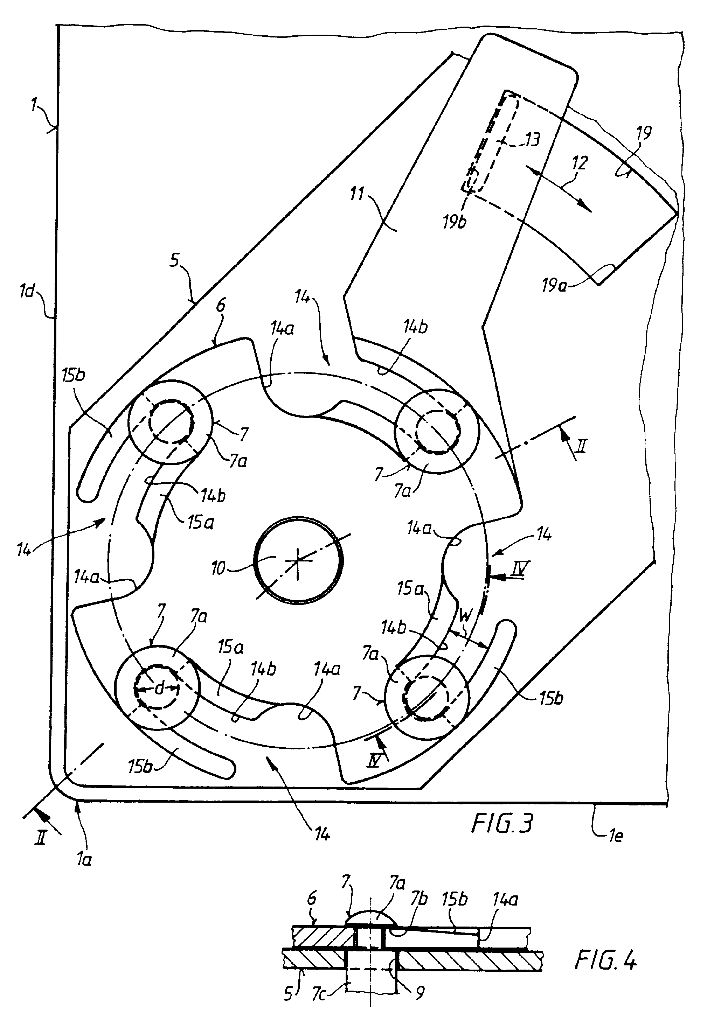

Die Ausbildung einer erfindungsgemäßen Verbindungseinrichtung zwischen einem Tischbein und wenigstens einer Tischplatte sei zunächst allgemein anhand der Fig.1 und 2 erläutert. Hierbei sei angenommen, daß der herzustellende Tisch aus einer rechteckigen Tischplatte 1 und vier in jedem Eckbereich 1a dieser Tischplatte anzuordnenden Tischbeinen zusammengebaut wird, von denen in den Zeichnungen jeweils nur ein einziges Tischbein 2 mit seinem oberen Ende 2a veranschaulicht ist. Die drei anderen Eckbereiche 1a der Tischplatte 1 sowie die drei übrigen Tischbeine 2 sind gleichartig wie der bzw. das veranschaulichte ausgebildet.

Gemäß den Fig.1 und 2 enthält die erfindungsgemäße Verbindungseinrichtung für ihre lösbare und arretierbare Ausbildung ein stirnseitig am oberen Ende 2a des Tischbeines 2 befestigten ersten Verbindungsteil 3 sowie ein der Tischplatte 1 zugeordneten zweiten Verbindungsteil 4, das eine an der Unterseite 1b dieser Tischplatte 1 befestigte Zargenplatte 5 sowie eine flach bzw. flächig auf dieser Zargenplatte 5 angeordnete Spannverschlußplatte 6 enthält (Fig.2).

Generell könnte dieser zweite Verbindungsteil 4 einfach an die ebene Unterseite 1b der Tischplatte 1 angebracht werden. Aus praktischen und optischen Gründen wird es jedoch vorgezogen, im Eckbereich 1a an der Unterseite 1b dieser Tischplatte 1 eine den Abmessungen des zweiten Verbindungsteiles 4 entsprechende Ausfräsung vorzusehen, in die der zweite Verbindungsteil 4 in der veranschaulichten Weise genau passend und bündig zur Unterseite 1b aufgenommen werden kann.

Der stirnseitig am oberen Ende 2a des Tischbeines 2 zu befestigende erste Verbindungsteil 3 weist mehrere symmetrisch zueinander angeordnete, vorzugsweise vier in den Ecken eines gedachten Quadrates gleichmäßig verteilte, senkrecht nach oben vorstehende Spannbolzen 7 auf, die an ihren oberen freien Enden mit Köpfen 7a ausbildet sind. Diese Spannbolzenköpfe 7a besitzen vorzugsweise eine Kugelkalottenform, und unmittelbar unter jedem Kopf 7a ist ein ringförmig umlaufender Nuteinstich 7b vorgesehen, dessen Breite (in axialer Richtung des Spannbolzens gesehen) der Materialdicke Md der Spannverschlußplatte 6 entspricht. Da ferner vorgezogen wird, den Kopf 7a und den neben dem Nuteinstich 7b verbleibenden, größten Schaftteil 7c jedes Spannbolzens 7 mit gleich großem Außendurchmesser D zu versehen, ergibt sich durch die radiale Nuttiefe des Nuteinstiches 7b unmittelbar unter jedem Spannbolzenkopf 7a ein Teilabschnitt mit verringertem Durchmesser d, auf dessen Bedeutung weiter unten noch näher eingegangen wird.

Grundsätzlich könnte nun jedes Tischbein 2 in jeder gewünschten Weise aus Vollmaterial, z. B. Holz, oder aus geeigneten Rohprofilen (Metall, insbesondere Aluminiumprofile) ausgeführt sein, wobei dann der erste Verbindungsteil 3 der Verbindungseinrichtung diesem Bein entsprechend angepaßt wird, bei stirnseitiger Befestigung am oberen Beinende 2a. Bei der veranschaulichten Ausführungsform sei angenommen und bevorzugt, daß die Tischbeine 2 in Form eines Hohlprofiles mit im wesentlichen rechteckigem, vorzugsweise quadratischem Querschnitt ausgeführt und diese Hohlprofile in Form eines solchen Metallprofiles, insbesondere eines Aluminiumprofiles ausgebildet sind (wie in Fig.2 angedeutet ist). In Anpassung an diese Ausbildung der Tischbeine 2 ist es dann besonders vorteilhaft, wenn der erste Verbindungsteil 3 der Verbindungseinrichtung einen Einsatzkörper 8 enthält, der in seinen Außenabmessungen den Innenabmessungen des Tischbeinprofiles angepaßt ist, einen ausreichende Höhe besitzt und vorzugsweise mit Preßsitz in diesem oberen Tischbeinende 2a befestigt ist. Dabei weist dieser Einsatzkörper 8 - wie in den Fig.1 und 2 zu erkennen ist - einen etwa um die Materialdicke des Tischbeinprofiles verbreiterten, zur Abstützung auf der oberen Tischbeinprofilkante bestimmten oberen Schulterrand 8a auf, und in diesem Einsatzkörper 8 sind 4 axial bzw. vertikal verlaufende Bohrungen 8b in einer solchen Verteilung vorgesehen, daß in ihnen die bereits weiter oben erwähnten Spannbolzen 7 fest aufgenommen sind, wobei diese Spannbolzen lediglich in der erforderlichen Weise ausreichend weit aus der Oberseite 8c diese Einsatzkörpers 8 herausragen, damit die gewünschte Verbindung zwischen dem ersten Verbindungsteil 3 und dem zweiten Verbindungsteil 4 zuverlässig hergestellt werden kann.

Die an der Unterseite 1b der Tischplatte 1 befestigte, vorzugsweise angeschraubte Zargenplatte 5 des zweiten Verbindungsteiles enthält in Anpassung an die Größe, Anzahl und Verteilung der Spannbolzen 7 und der Spannbolzenköpfe 7a vier Durchgangsbohrungen 9, d. h. diese Durchgangsbohrungen 9 sind somit ebenfalls in den vier Ecken eines gedachten Quadrats gleichmäßig verteilt angeordnet, bei gleichen Abständen zueinander wie die Spannbolzen 7, und der Durchmesser dieser Durchgangsbohrungen 9 ist nur geringfügig größer als der Außendurchmesser D der Spannbolzen 7 und ihrer Köpfe 7a, damit diese Spannbolzen nahezu genau passend von unten her in die Durchgangsbohrungen 9 hineingesteckt werden können.

Die flächig unmittelbar auf dieser Zargenplatte 5 aufliegende Spannverschlußplatte 6 kann relativ zur Zargenplatte 5 um eine vertikale Achse 10 zwischen einer ersten, Freigabestellung und einer zweiten, Arretierungsstellung begrenzt verdreht werden. Wie in Fig.3 zu erkennen ist, ist die Spannverschlußplatte 6 im wesentlichen kreisförmig ausgebildet, und sie weist an ihrem einen Umfangsabschnitt einen einstückig angeformten, von der Drehachse 10 weggerichteten Hebelarm 11 für ihre Drehbetätigung in Richtung des Doppelpfeiles 12 auf. An diesem Hebelarm 11 der Spannverschlußplatte 6 ist ein nach unten vorstehender Griff 13 befestigt, der in montiertem Zustand dieses zweiten Verbingungsteiles 4 bis unterhalb der Ebene der Tischplatten-Unterseite 1b ausreichend weit vorsteht.

Besonders in dieser Fig.3 läßt sich ferner gut erkennen, daß im Umfangsbereich dieser Spannverschlußplatte 6 wiederum vier in ihrer Lageverteilung den Spannbolzen 7 des ersten Verbindungsteiles 3 angepaßte Aufnahmeöffnungen 14 eingearbeitet sind, die dabei im Bereich über den Durchgangsbohrungen 9 der Zargenplatte 5 vorgesehen und klauenartig derart geformt sind, daß in der Freigabestellung der Spannverschlußplatte 6 wenigstens einige der Spannbolzenköpfe 7a des ersten Verbindungsteiles 3 in diese Aufnahmeöffnungen 14 frei einführbar (und auch frei herausziehbar) und daß in die in diese Aufnahmeöffnungen 14 eingeführten Spannbolzenköpfe 7a in der Arretierungsstellung (ausgezogene Linie Fig.3) der Spannverschlußplatte 6 von dieser Spannverschlußplatte ergriffen und unter fester Verspannung des ersten Verbindungsteiles mit dem zweiten Verbindungsteil 4 arretiert sind.

Um einerseits das freie Einführen bzw. das freie Herausziehen der Spannbolzenköpfe 7a in die Aufnahmeöffnungen 14 und andererseits das erwähnte zuverlässige Ergreifen und Festspannen der Spannbolzenköpfe 7a mit Hilfe der Spannverschlußplatte 6 ermöglichen zu können, weisen die Aufnahmeöffnungen 14 jeweils einen erweiterten ersten Öffnungsabschnitt 14a und einen schmaleren zweiten Öffnungsabschnitt 14b auf. Wie in Fig.3 veranschaulicht ist, ist jeder erweiterte erste Öffnungsabschnitt 14a dem Durchmesser der Spannbolzenköpfe 7a so angepaßt, daß jeweils ein Spannbolzenkopf 7a gerade frei in diesen ersten Öffnungsabschnitt 14a eingeführt bzw. daraus herausgezogen werden kann. Dagegen sind die schmaleren zweiten Öffnungsabschnitte 14b der Aufnahmeöffnungen 14 als auf die Drehachse 10 zentrierte, kreisbogenförmige Schlitze ausgeführt, die eine über ihre Bogenlänge im wesentlichen gleichbleibende Schlitzweite W besitzen und die an ihren einen Enden offen in den jeweils zugehörigen erweiterten ersten Öffnungsabschnitt 14a ausmünden, wobei die Schlitzweite W dem durch den Nuteinstich 7b verringerten Spannbolzenschaft-Durchmesser d unmittelbar unterhalb des jeweiligen Spannbolzenkopfes 7a angepaßt ist.

Wie ferner anhand der Fig.3 und 4 veranschaulicht ist, sind diese schlitzförmigen zweiten Öffnungsabschnitte 14b von Verschlußplattenbereichen in Form von Schrägflächen, und zwar jeweils einer inneren Schrägfläche 15a und einer äußeren Schrägfläche 15b seitlich begrenzt, die jeweils vom zugehörigen erweiterten Öffnungsabschnitt 14a bis in den Bereich des entgegengesetzten Schlitzendes, d. h. vorzugsweise bis kurz vor diesem Schlitzende (vgl. Fig.4), gleichmäßig ansteigen, wobei die die zweiten Öffnungsabschnitte 14b begrenzenden Schrägflächen 15a, 15b in der Arretierungsstellung der Spannverschlußplatte 6 die in die ersten Öffnungsabschnitte 14a eingeführten Spannbolzenköpfe 7a festspannend untergreifen, wie sich in den Fig.2 und 4 erkennen läßt. Da die Spannbolzenköpfe 7a und der verbleibende Schaftteil 7c jedes Spannbolzens 7 einen gleichgroßen Durchmesser D aufweisen und die in der Zargenplatte 5 vorgesehenen Durchgangsbohrungen 9 in ihrer Größe diesem Durchmesser D angepaßt sind, ist das den Kopf 7a und den Nuteinstich 7b aufweisende oberste Ende jedes Spannbolzens 7 in bzw. auf der Spannverschlußplatte 6 und das daran unmittelbar anschließende obere Ende des Schaftteiles 7c in der zugehörigen Durchgangsbohrung 9 der Zargenplatte 5 stabil und zuverlässig festgelegt, wenn der erste Verbindungsteil 3 mit dem zweiten Verbindungsteil 4 in der Arretierungsstellung der Spannverschlußplatte 6 verspannt ist (Fig.2 und 3). Diese zuverlässige Verspannung der beiden Verbindungsteile 3 und 4 wird noch dadurch unterstützt, daß das Maß, um das die Unterkanten der Spannbolzenköpfe 7a von der Oberseite des ersten Spannverschlußteiles 3 bzw. dessen Einsatzteil 8 nach oben vorstehen (wie in Fig.2 zu erkennen), der Gesamtdicke aus Zargenplatte 5 und damit verbundener (flächig aufgelegter) Spannverschlußplatte 6 entspricht.

Wie bereits weiter oben erwähnt worden ist, wird der zweite Verbindungsteil 4 in der an der Unterseite 1b der Tischplatte 1 vorgesehenen Ausfräsung 1c dadurch befestigt, daß die gleichzeitig gewissermaßen als Sichtabdeckplatte dienende Zargenplatte 5 - wie in den Fig.1 und 2 angedeutet - durch mehrere Holzschrauben 16 mit der Tischplatte 1 verschraubt ist. Es wird dabei bevorzugt, die Drehachse, um die die Spannverschlußplatte 6 begrenzt relativ zur Zargenplatte 5 drehbar ist, durch einen Drehzapfen 10 zu bilden, der in der Zargenplatte 5 in der in Fig.2 veranschaulichten Weise festgelegt ist und dabei durch eine passende, zentrale Lagerbohrung 17 in der Spannverschlußplatte 6 hindurchgreift. Hierbei kann die Spannverschlußplatte 6 dadurch gegenüber der Zargenplatte 5 lageorientiert und zuverlässig festglegt sein, daß an dem oberen freien und zylindrischen Ende des beispielsweise mit einem flachen unteren Kopf ausgebildeten Drehzapfens 10 ein Sprengring 18 lösbar festgelegt ist.

In der Zargenplatte 5 ist ferner eine kreisbogenförmige, schlitzartige Aussparung 19 vorgesehen, durch die der Griff 13 des Verschlußplatten-Hebelarmes 11 frei nach unten hindurchragt und deren Enden in der Weise Endanschläge 19a bzw. 19b für diesen Griff 13 bilden, daß der eine Endanschlag, z. B. der Endanschlag 19a, die Freigabestellung und der andere Endanschlag, z. B. 19b, die Arretierungsstellung der Spannverschlußplatte 6 bestimmt, wenn der Griff 13 bzw. der zugehörige Verschlußplatten-Hebelarm 11 am entsprechenden Endanschlag 19a bzw. 19b anliegt.

Vorteilhaft ist es ferner, wenn oberhalb der Spannverschlußplatte 6 eine an der Unterseite der Tischplatte 1 (innerhalb der Ausfräsung 1c) befestigte, vorzugsweise kreisbogenförmige Blendenplatte 20 vorgesehen ist, die etwas größer ist als die schlitzförmige Aussparung 19 und dabei diese schlitzförmige Aussparung 19 in der Zargenplatte 5 nach Art einer Sichtblende abdeckt, wie es in Fig.2 angedeutet ist. Diese Blendenplatte 20 weist dabei an ihrer der Spannverschlußplatte 6 zugewandten Unterseite Führungsvorsprünge 20a auf, die ebenfalls etwa kreisbogenförmig verlaufen und gegen die sich die Spannverschlußplatte 6 mit ihrer Oberseite abstützt, so daß dadurch gleichzeitig eine zusätzliche sichere Führung und Abstützung der Spannverschlußplatte 6 bei ihrer Drehbewegung in Richtung des Doppelpfeiles 12 gegeben ist.

Da bei dieser Verbindungseinrichtung die vier Spannbolzen 7 in den vier Ecken eines gedachten Quadrats gleichmäßig verteilt am ersten Verbindungsteil 3 befestigt und in dazu passender quadratischer Verteilung die vier Durchgangsbohrungen 9 in der Zargenplatte 5 sowie die vier Aufnahmeöffnungen 14 in der Spannverschlußplatte 6 angeordnet sind, ergeben sich ganz besonders gute Voraussetzungen dafür, die an ihrem oberen Ende mit je einem ersten Verbindungsteil 3 fest verbundenen Tischbeine 2 jederzeit lösbar und auswechselbar fest und zuverlässig mit der Unterseite einer Tischplatte 1 zu verspannen, und zwar mit den dort vorzugsweise in den Eckbereichen befestigten zweiten Verbindungsteilen 4 der Verbindungseinrichtung.

Geht man in diesem Sinne davon aus, daß in den vier Eckbereichen einer einzigen Tischplatte 1 je ein Tischbein 2 in der insbesondere aus den Fig.1 und 2 ersichtlichen Weise lösbar befestigt werden soll, dann wird dazu zunächst in jedem Tischplatten-Eckbereich 1a die Spannverschlußplatte 6 des zweiten Verbindungsteiles 4 mit Hilfe des Griffes 13 und des zugehörigen Hebelarmes 11 entsprechend Doppelpfeil 12 in die Freigabestellung gedreht (bzw. geschwenkt bzw. geschoben). Daraufhin wird dann das zu einem Eckbereich 1a der Tischplatte 1 gehörende Tischbein 2 - entsprechend Darstellung in Fig.1 - in Richtung des Pfeiles 21 sowie gegen die Unterseite 1b der Tischplatte 1 bewegt, so daß je einer der vier Spannbolzenköpfe 7a von unten her zunächst durch eine zugehörige Durchgangsbohrung 9 der Zargenplatte 5 und dann durch einen zugehörigen, direkt darüberliegenden erweiterten ersten Öffnungsabschnitt 14a der Aufnahmebohrungen 14 so weit nach oben in den zweiten Verbindungsteil 4 eingeführt wird, bis die Oberseite des Einsatzkörpers 8 flächig an der Unterseite der Zargenplatte 5 anliegt. Nun wird die Spannverschlußplatte 6 durch Betätigung des Hebelarmes 11 über den Griff 13 in Richtung des Doppelpfeiles 12 in ihre Arretierungsstellung gedreht, wobei die schmaleren zweiten Öffnungsabschnitte 14a der Aufnahmeöffnungen 14 unmittelbar unter die Spannbolzenköpfe 7a in die Nuteinstiche 7b eingreifen, wobei die Schrägflächen 15a und 15b seitlich der zweiten Öffnungsabschnitte 14b untergreifen und dadurch die Spannbolzen 7 mitsamt dem Einsatzkörper 8 und dem daran befestigten Tischbein 2 zusätzlich fest in die Durchgangsbohrungen 9 sowie gegen die Unterseite der Zargenplatte 5 des zweiten Verbindungsteiles 4 ziehen und dabei zuverlässig die beiden Verbindungsteile 3 und 4 und damit die Tischplatte 1 mit dem Tischbein 2 verspannen, wie es in Fig.2 veranschaulicht ist.

Da - wie erwähnt - die vier Spannbolzen 7 in den vier Ecken eines gedachten Quadrats gleichmäßig verteilt sind, befinden sich auf jeder Quadratseite zwei paarweise zusammengehörige Spannbolzen 7 mit Spannbolzenköpfen 7a (vgl. auch Darstellung in Fig.3), und in gleicher Weise sind dementsprechend auch passend die Durchgangsbohrungen 9 mit den darüberliegenden Aufnahmeöffnungen 14 im zweiten Verbindungsteil 4 verteilt und angeordnet. Hierbei liegen dann zweckmäßig jeweils zwei paarweise zu einer Quadratseite gehörende Durchgangsbohrungen 9 mit zugehörigen Aufnahmeöffnungen 14 nahe und parallel zu einer Kante der Tischplatte 1. Wenn somit - wie sich weitgehend aus Fig.3 entnehmen läßt - der zweite Verbindungsteil 4 im Eckbereich 1a der Tischplatte 1 derart angeordnet ist, daß ein Paar zu einer Quadratseite gehörender Durchgangsbohrungen 9 mit zugehörigen Aufnahmeöffnungen 14 der einen Tischkante 1d des Eckbereiches 1a und ein zweites Paar von zu einer rechtwinklig benachbarten zweiten Quadratseite gehörenden Durchgangsbohrungen 9/Aufnahmeöffnungen 14 der rechtwinklig angrenzenden benachbarten Kante 1e des Eckbereiches 1a zugeordnet ist, dann kann das obere Ende 2a des Tischbeines 2 über seinen daran befestigten ersten Verbindungsteil 3 genau in diesen Eckbereich 1a passend und problemlos auswechselbar angeordnet werden. Hierbei kann die Anordnung so getroffen werden, daß die Außenseiten des Tischbeines bündig oder nahezu bündig (je nach Bedarf) mit den entsprechenden Außenkanten 1d, 1e des Tischplatten-Eckbereiches 1a liegen.

Bei der zuvor erläuterten Zusammenordnung und Ausbildung ist es ferner besonders vorteilhaft, wenn - wie in Fig.5 angedeutet - bei einer Zusammenbaumöglichkeit eines Tisches aus wenigstens zwei mit ihren gegenüberliegenden Kanten stumpf aneinanderstoßenden Tischplatten 1, 1' mit unter ihren Eckbereichen anzuordnenden Tischbeinen 2 an der Unterseite 1b bzw. 1'b jedes Eckbereiches der Tischplatten 1, 1' je ein zweiter Verbindungsteil 4, 4' in gleicher Weise wie es zuvor erläutert worden ist, befestigt ist. Hierbei weist dann das Paar Durchgangsbohrungen 9/Aufnahmeöffnungen 14 im zweiten Verbindungsteil 4 der ersten Tischplatte 1 von dem gegenüberliegenden Paar Durchgangsbohrungen 9/14 im zweiten Verbindungsteil 4' der benachbarten anderen Tischplatte 1' einen Mittenabstand MA auf, der genau dem Mittenabstand MS zweier benachbarter Spannbolzen 7 (vgl. Fig.2) eines Tischbeines 2 derart entspricht, daß von ein und demselben Tischbein zwei Spannbolzen 7 des ersten Verbindungsteiles 3 im zweiten Verbindungsteil 4 am Eckbereich der ersten Tischplatte 1 und die beiden anderen Spannbolzen 7 dieses ersten Verbindungsteiles 3 im zweiten Verbindungsteil 4' am Eckbereich der zweiten Tischplatte 1' lösbar verspannt werden können. Um dies zu erreichen, bedarf es somit lediglich einer entsprechend genauen Anordnung der zweiten Verbindungsteile 4, 4' in den Eckbereichen jeder Tischplatte 1, 1' usw., während die Ausbildung und Konstruktion aller ersten und zweiten Verbindungsteile 3, 4, 4' usw. genau gleichartig ausgeführt sein können. Ein Tischbein 2 kann somit wahlweise nur mit einem einzigen Eckbereich einer einzigen Tischplatte oder auch - bei genau gleichartiger Ausführung - zur Abstützung und Verspannung mit wenigstens zwei Eckbereichen zweier stumpf aneinanderstoßender Tischplatten verwendet werden. Wenn dementsprechend eine Anzahl gleichartig ausgeführter und an ihren Eckbereichen mit gleichen zweiten Verbindungsteilen 4 versehener Tischplatten sowie eine Anzahl von in der geschilderten Weise ausgeführten Tischbeinen 2 mit ersten Verbindungsteilen 3 vorhanden ist, dann läßt sich ein Tisch beliebiger Größe zusammenbauen, d. h. entweder mit nur einer einzigen Tischplatte oder mit einer Anzahl den jeweiligen Bedarfsfällen angepaßten Tischplatten, um dann beispielsweise einen größeren Besprechungs- oder Konferenztisch zusammenzubauen. Stellt man sich hier beispielsweise eine Tischplatte mit einem Grundmaß von 90 x 180 cm vor, dann lassen sich mit Hilfe dieser Tischplatten und der Tischbeine 2 beliebig große Tische gewissermaßen baukastenartig zuverlässig und fest zusammenbauen, wobei dieses Zusammenbauen und ein eventuelles Umbauen äußerst rasch erfolgen kann und dabei stets eine äußerst stabile Konstruktion gewährleistet ist.

Bei der erfindungsgemäßen Verbindungseinrichtung lassen sich im Bedarfsfalle auch gleichzeitig besonders günstige optische Wirkungen dadurch erzielen, daß beispielsweise - wie in den Fig.1 und 5 angedeutet - das aus dem oberen Ende 2a des Tischbeines 2 herausragende und den Schulterrand 8a aufweisende obere Ende des Einsatzkörpers 8 eine entsprechend angepaßte und gewollte Außenprofilierung 8d aufweist.

Die einzelnen Elemente der beiden Verbindungsteile 3 und 4 können jeweils aus den am besten geeigneten Materialien, insbesondere Metall und Kunststoff, hergestellt sein. So eignet sich für die Herstellung des Einsatzkörpers 8 des ersten Verbindungsteiles beispielsweise besonders gut ein Kunststoffmaterial, das eine Gußherstellung gestattet, während die darin befestigten Spannbolzen 7 vorzugsweise Stahlbolzen sind. Die Zargenplatte 5 und die Spannverschlußplatte 6 können dagegen bevorzugt aus Metall, insbesondere Stahlblech und/oder Aluminiumblech hergestellt sein.

## Patentansprüche

1. Verbindungseinrichtung zwischen dem oberen Ende eines Tischbeines (2) und wenigstens einer Tischplatte (1) zum Zusammenbau eines Tisches,
gekennzeichnet durch eine lösbare und arretierbare Ausbildung mit folgenden Merkmalen:
a) Einen stirnseitig am oberen Ende (2a) des Tischbeines (2) befestigbaren ersten Verbindungsteil (3), der mehrere symmetrisch zueinander angeordnete, senkrecht nach oben vorstehende Spannbolzen (7) mit an ihren freien Enden ausgebildeten Köpfen (7a) aufweist;
b) einen der Tischplatte (1) zugeordneten zweiten Verbindungsteil (4), der eine an der Unterseite (1b) der Tischplatte befestigbare Zargenplatte (5) mit mehreren in ihrer Größe, Anzahl und Verteilung den Spannbolzen (7) und Spannbolzenköpfen (7a) des ersten Verbindungsteiles (3) angepaßten Durchgangsbohrungen (9) sowie eine flach auf dieser Zargenplatte angeordnete Spannverschlußplatte (6) enthält, die relativ zur Zargenplatte um eine vertikale Achse (10) zwischen einer Freigabestellung und einer Arretierungsstellung begrenzt drehbar ist und die an ihrem Umfang mehrere im Bereich über den Durchgangsbohrungen (9) der Zargenplatte (5) vorgesehene, klauenartig derart geformte Aufnahmeöffnungen (14) aufweist, daß in der Freigabestellung der Spannverschlußplatte (6) wenigstens einige Spannbolzenköpfe (7a) des ersten Verbindungsteiles in diese Aufnahmeöffnungen (14) frei einführbar und die in diese Aufnahmeöffnungen eingeführten Spannbolzenköpfe (7a) in der Arretierungsstellung der Spannverschlußplatte (6) von dieser ergriffen und unter fester Verspannung des ersten Verbindungsteiles (3) mit dem zweiten Verbindungsteil (4) arretiert sind.

2. Verbindungseinrichtung nach Anspruch 1, dadurch gekennzeichnet, daß die Spannverschlußplatte (6) im wesentlichen kreisförmig ausgebildet ist und an ihrem einen Umfangsabschnitt einen einstückig angeformten, von der Drehachse (10) weggerichteten Hebelarm (11) für die Drehbetätigung (12) dieser Spannverschlußplatte aufweist.

3. Verbindungseinrichtung nach Anspruch 2, dadurch gekennzeichnet, daß der Hebelarm (11) der Spannverschlußplatte (6) einen nach unten vorstehenden Griff (13) aufweist und daß in der Zargenplatte (5) eine kreisbogenförmige, schlitzartige Aussparung (19) vorgesehen ist, durch die der Griff (13) des Verschlußplatten-Hebelarmes (11) frei nach unten hin durchragt und deren Enden in der Weise Endanschläge (19a, 19b) für diesen Griff bilden, daß sie einerseits die Freigabestellung und andererseits die Arretierungsstellung der Spannverschlußplatte bestimmen.

4. Verbindungseinrichtung nach Anspruch 3, dadurch gekennzeichnet, daß oberhalb der Spannverschlußplatte (6) eine an der Unterseite der Tischplatte (1) befestigbare, vorzugsweise kreisbogenförmige Blendenplatte (20) vorgesehen ist, die die schlitzartige Aussparung (19) in der Zargenplatte (5) nach Art einer Sichtblende abdeckt und die an ihrer der Spannverschlußplatte (6) zugewandten Unterseite Führungsvorsprünge (20a) aufweist, gegen die sich die Spannverschlußplatte mit ihrer Oberseite abstützt.

5. Verbindungseinrichtung nach Anspruch 1, dadurch gekennzeichnet, daß die Drehachse der Spannverschlußplatte (6) durch einen Drehzapfen (10) gebildet ist, der in der Zargenplatte (5) festgelegt ist und durch eine zentrale Lagerbohrung (17) in der Spannverschlußplatte hindurchgreift.

6. Verbindungseinrichtung nach Anspruch 1, dadurch gekennzeichnet, daß die Aufnahmeöffnungen (14) in der Spannverschlußplatte (6) jeweils einen dem Durchmesser (D) der Spannbolzenköpfe (7a) angepaßten erweiterten ersten Öffnungsabschnitt (14a) und einen schmaleren zweiten Öffnungsabschnitt (14b) aufweisen und daß diese zweiten Öffnungsabschnitte (14b) als auf die Drehachse (10) zentrierte kreisbogenförmige Schlitze ausgeführt sind, die eine über ihre Länge im wesentlichen gleichbleibende, dem Durchmesser (d) der unmittelbar unterhalb der Spannbolzenköpfe (7a) liegenden Spannbolzenschaftabschnitte (7b) angepaßte Weite (W) besitzen, an ihren einen Enden offen in den jeweils zugehörigen erweiterten ersten Öffnungsabschnitt (14a) ausmünden und die von Verschlußplattenbereichen in Form von Schrägflächen (15a, 15b) seitlich begrenzt sind, die jeweils vom zugehörigen ersten Öffnungsabschnitt (14a) bis in den Bereich des entgegengesetzten Schlitzendes gleichmäßig ansteigen, wobei die diese zweiten Öffnungsabschnitte (14b) begrenzenden Schrägflächen (15a, 15b) bei der Drehbetätigung in die Arretierungsstellung der Spannverschlußplatte (6) die in die ersten Öffnungsabschnitte (14a) eingeführten Spannbolzenköpfe (7a) festspannend untergreifen.

7. Verbindungseinrichtung nach Anspruch 6, dadurch gekennzeichnet, daß die Köpfe (7a) an den freien Enden der Spannbolzen (7) eine Kugelkalottenform besitzen und daß die Spannbolzen-Schaftabschnitte unmittelbar unter jedem Kopf einen ringförmig umlaufenden Nuteinstich (7b) aufweisen, dessen Breite der Materialdicke (Md) der Spannverschlußplatte (6) entspricht und dessen Nuttiefe so bemessen ist, daß der im Bereich dieses Nuteinstiches verringerte Spannbolzendurchmesser (d) der Schlitzweite (W) der zweiten Öffnungsabschnitte (14b) in der Spannverschlußplatte angepaßt ist, wobei die Köpfe (7a) und der verbleibende Schaftteil (7c) jedes Spannbolzens (7) einen gleich großen Durchmesser (D) aufweisen und die in der Zargenplatte (5) vorgesehenen Durchgangsbohrungen (9) in ihrer Größe diesem Durchmesser angepaßt sind.

8. Verbindungseinrichtung nach Anspruch 7, dadurch gekennzeichnet, daß das Maß, um das die Unterkante der Spannbolzenköpfe (7a) von der Oberseite des ersten Verbindungsteiles (3) nach oben vorstehen, der Gesamtdicke der miteinander verbundenen Zargen- und Spannverschlußplatten (5, 6) entspricht.

9. Verbindungseinrichtung nach Anspruch 1, wobei Tischbeine in Form eines Hohlprofiles mit im wesentlichen rechteckigem Querschnitt, vorzugsweise in Form eines solchen Metallprofils, vorgesehen sind, dadurch gekennzeichnet, daß der erste Verbindungsteil (3) einen vorzugsweise mit Preßsitz im oberen Tischbeinende (2a) befestigbaren Einsatzteil (8) enthält, der einen etwa um die Materialdicke des Tischbeinprofiles verbreiterten, zur Abstützung auf der oberen Tischbein-Profilkante bestimmten oberen Schulterrand (8a) aufweist und in dem vertikal verlaufende Bohrungen (8b) vorgesehen sind, in denen die Spannbolzen (7) fest aufgenommen sind.

10. Verbindungseinrichtung nach Anspruch 1, dadurch gekennzeichnet, daß vier Spannbolzen (7) in den vier Ecken eines gedachten Quadrats gleichmäßig verteilt am ersten Verbindungsteil (3) befestigt und daß in dazu passender quadratischer Verteilung vier Durchgangsbohrungen (9) in der Zargenplatte (5) sowie vier Aufnahmeöffnungen (14) in der Spannverschlußplatte (6) angeordnet sind, wobei zumindest zwei paarweise zu einer Quadratseite gehörende Durchgangsbohrungen (9)/Aufnahmeöffnungen (14) nahe an und parallel zu einer Kante der Tischplatte (1) liegen.

11. Verbindungseinrichtung nach Anspruch 1, dadurch gekennzeichnet, daß der zweite Verbindungsteil (4, 4') im Eckbereich (1a) der Tischplatte (1, 1') derart angeordnet ist, daß ein Paar zu einer Quadratseite gehörender Durchgangsbohrungen (9)/Aufnahmeöffnungen (14) der einen Kanten (1d) des Tischplatteneckbereiches und ein zweites Paar von zu einer rechtwinklig benachbarten zweiten Quadratseite gehörenden Durchgangsbohrungen (9)/Aufnahmeöffnungen (14) der rechtwinklig angrenzenden benachbarten Kante (1e) des Tischplatten-Eckbereiches zugeordnet ist.

12. Verbindungseinrichtung nach Anspruch 11, wobei wenigstens zwei mit ihren gegenüberliegenden Kanten stumpf aneinanderstoßende Tischplatten (1, 1') mit unter ihren Eckbereichen anzuordnenden Tischbeinen (2) zu einem Tisch zusammenbaubar sind, dadurch gekennzeichnet, daß an der Unterseite (1b, 1'b) jedes Eckbereiches der Tischplatten (1, 1') ein zweiter Verbindungsteil (4, 4') in der Weise befestigt ist, daß das Paar Durchgangsbohrungen (9)/Aufnahmeöffnungen (14) im zweiten Verbindungsteil (4) der ersten Tischplatte (1) von dem gegenüberliegenden Paar Durchgangsbohrungen/Aufnahmeöffnungen im zweiten Verbindungsteil (4') der benachbarten anderen Tischplatte (1') einen Mittenabstand (MA) aufweist, der genau dem Mittenabstand (MS) zweier benachbarter Spannbolzen (7) am ersten Verbindungsteil (3) eines Tischbeines (2) derart entspricht, daß von ein und demselben Tischbein (2) zwei Spannbolzen (7) des ersten Verbindungsteiles (3) im zweiten Verbindungsteil (4) am Eckbereich der ersten Tischplatte (1) und die beiden anderen Spannbolzen (7) dieses ersten Verbindungsteiles im zweiten Verbindungsteil (4') am Eckbereich der anderen Tischplatte (1') lösbar verspannbar sind.

## Claims

1. Connecting arrangement between the upper end of a table leg (2) and at least one table plate (1) for assembly of a table, characterised by a releasable and lockable construction with the following features:
a) a first connecting part (3) which is fixed on the upper end face (2a) of the table leg (2) and has several clamp bolts (7) arranged symmetrically with respect to one another and projecting vertically upwards with heads (7a) constructed on their free ends;
b) a second connecting part (4) which is co-ordinated with the table plate (1) and which comprises an edge plate (5) which can be fixed on the underside (1b) of the table plate with several bores (9) adapted in their size, number and distribution to the clamp bolts (7) and clamp bolt heads (7a) of the first connecting part (3) as well as a clamp closure plate (6) which is arranged flat on this edge plate, is capable of limited rotary movement relative to the edge plate about a vertical axis (10) between a release position and a locking position, and has on its periphery several receiving holes (14) which are provided in the region above the bores (9) in the edge plate (5) and are shaped like catches in such a way that in the release position of the clamp closure plate (8) at least some clamp bolt heads (7a) of the first connecting part can be freely inserted into these receiving holes (14) and in the locking position of the clamp closure plate (6) the clamp bolt heads (7a) inserted into these receiving holes are gripped by the clamp closure plate and are locked by firm clamping of the first connecting part (3) with the second connecting part (4).

2. Connecting arrangement as claimed in claim 1, characterised in that the clamp closure plate (6) is of essentially circular construction and has a lever arm (11) which is formed integrally on one peripheral section and is directed away from the axis of rotation (10) for the rotary actuation (12) of this clamp closure plate.

3. Connecting arrangement as claimed in claim 2, characterised in that the lever arm (11) of the clamp closure plate (6) has a downwardly projecting knob (13) and that a circular slot-like cut-out (19) through which the knob (13) of the closure plate lever arm (11) projects freely downwards is provided in the edge plate (5), and the ends of the cut-out form end stops (19a, 19b) for this knob in such a way that they determine on the one hand the release position and on the other hand the locking position of the clamp closure plate.

4. Connecting arrangement as claimed in claim 3, characterised in that a shield plate (20) is provided above the clamp closure plate (6) which is preferably circular and can be fixed on the underside of the table plate (1) and which covers the slot-shaped cut-out (19) in the edge plate (5) in the manner of a window shield and which has on its underside facing the clamp closure plate (6) guide projections (20a) against which the clamp closure plate is supported with its upper face.

5. Connecting arrangement as claimed in claim 1, characterised in that the axis of rotation of the clamp closure plate (6) is formed by a journal (10) which is fixed in the edge plate (5) and engages through a central bearing bore (17) in the clamp closure plate.

6. Connecting arrangement as claimed in claim 1, characterised in that the receiving holes (14) in the clamp closure plate (6) each have a first hole section (14a) adapted to the diameter (D) of the clamp bolt heads (7a) and a narrower second hole section (14b), and these second hole sections (14b) are constructed as circular slots which are centred on the axis of rotation (10) and have a width (W) which remains substantially the same over their length and is adapted to the diameter (d) of the clamp bolt shank sections (7b) lying immediately below the clamp bolt heads (7a), so that these circular slots each open at one end into the appertaining widened first hole section (14a) and are defined laterally by regions of the closure plate in the form of inclined surfaces (15a, 15b) which in each case rise evenly from the appertaining first hole section (14a) as far as the region of the opposite end of the slot, so that during actuation into the locking position of the clamp closure plate (6) the inclined surfaces (15a, 15b) which define these second hole sections (14b) engage under the clamp bolt heads (7a) inserted into the first hole sections (14a) to clamp them firmly.

7. Connecting arrangement as claimed in claim 6, characterised in that the heads (7a) at the free ends of the clamp bolts (7) are in the shape of a spherical segment and the clamp bolt shank sections immediately below each head have an annular groove (7b) running round them, the width of the groove corresponding to the material thickness (Md) of the clamp closure plate (6) and the depth of the groove being such that the clamp bolt diameter (d) which is reduced in the region of this groove is adapted to the slot width (W) of the second hole sections (14b) in the clamp closure plate, and the heads (7a) and the remaining shank portion (7c) of each clamp bolt (7) have a diameter (D) of the same size and the bores (9) provided in the edge plate (5) are adapted in size to this diameter.

8. Connecting arrangement as claimed in claim 7, characterised in that the dimension by which the lower edge of the clamp bolt heads (7a) project upwards from the upper face of the first connecting part (3) corresponds to the combined thickness of the edge plates and clamp closure plates (5, 6) which are connected to one another.

9. Connecting arrangement as claimed in claim 1, in which table legs in the form of a hollow section with a substantially rectangular cross-section, preferably in the form of such a metal section, are provided, characterised in that the first connecting part (3) contains an insert part (8) which can be fixed in the upper end of the table leg (2a) with a press fit and which has an upper shoulder rim (8a) which is widened by approximately the material thickness of the table leg section and is intended for support on the upper edge of the table leg section, and vertically extending bores (8b) in which the clamp bolts (7) are firmly received are provided in the insert part.

10. Connecting arrangement as claimed in claim 1, characterised in that four clamp bolts (7) are fixed on the first connecting part (3) so that they are evenly distributed in the four corners of an imaginary square, and in a corresponding square distribution four bores (9) are arranged in the edge plate (5) and four receiving holes (14) in the clamp closure plate (6), so that at least two bores (9)/receiving holes (14) belonging as a pair to one side of the square lie near and parallel to one edge of the table plate (1).

11. Connecting arrangement as claimed in claim 1, characterised in that the second connecting part (4, 4') is arranged in the corner region (1a) of the table plate (1, 1') in such a way that a pair of bores (9)/receiving holes (14) belonging to one side of the square is co-ordinated with one edge (1d) of the corner region of the table plate and a second pair of bores (9)/receiving holes (14) belonging to a second side of the square lying adjacent at right angles is co-ordinated with the adjacent edge (1e) of the corner region of the table plate lying at right angles.

12. Connecting arrangement as claimed in claim 11, in which at least two table plates (1, 1') which butt flush against one another with their opposite edges can be assembled with table legs (2) which are to be arranged below their corner regions to form a table, characterised in that a second connecting part (4, 4' ) is fixed on the underside (1b, 1'b) of each corner region of the table plates (1, 1') in such a way that the pair of bores (9)/receiving holes (14) in the second connecting part (4) of the first table plate (1) have a centre-to-centre distance (MA) from the opposing pair of bores/receiving holes in the second connecting part (4') of the adjacent other table plate (1') which corresponds exactly to the centre-to-centre distance (MS) of two adjacent clamp bolts (7) on the first connecting part (3) of a table leg (2) in such a way that two clamp bolts (7) of of the first connecting part (3) can be releasably clamped in the second connecting part (4) on the corner region of the first table plate (1) and the two other clamp bolts (7) of this first connecting part can be releasably clamped in the second connecting part (4') on the corner region of the other table plate (1') by one and the same table leg (2).

## Revendications

1. Dispositif de liaison entre l'extrémité supérieure d'un pied (2) et au moins un plateau (1) pour l'assemblage d'une table, caractérisé par un mode d'exécution démontable et blocable, ayant les particularités suivantes :
a) un premier élément de liaison (3) se fixant sur la surface de l'extrémité supérieure (2a) du pied (2) et comportant plusieurs tenons de fixation (7) disposés symétriquement les uns par rapport aux autres, saillants verticalement vers le haut et comprenant à l'extrémité libre une tête (7a)
b) un second élément de liaison (4) affecté au plateau (1) et comprenant une plaque d'huisserie (5) se fixant sur le côté inférieur (1b) du plateau et comportant plusieurs trous de traversée (9) dont les dimensions, le nombre et la répartition correspondent à ceux des tenons de fixation et des têtes de ces derniers qui font partie du premier élément de liaison (3), ainsi qu'une plaque de verrouillage (6) disposée à plat sur cette plaque d'huisserie, pouvant tourner de manière limitée par rapport à la plaque d'huisserie autour d'un axe vertical (10) entre une position de libération et une position de blocage, cette plaque de verrouillage comportant à la circonférence plusieurs ouvertures de logement (14) prévues dans la région située au-dessus des trous de traversée (9) de la plaque d'huisserie (5) et conformées à empattement de manière qu'à la position de libération de la plaque de verrouillage (6), au moins certaines des têtes (7a) des tenons de fixation du premier élément de liaison puissent s'introduire librement dans ces ouvertures de logement (14) et que les têtes (7a) des tenons de fixation introduites dans ces ouvertures de logement soient saisies par la plaque de verrouillage (6) occupant la position de blocage et soient bloquées que manière que le premier élément de liaison (3) soit étroitement assujetti au second élément de liaison (4).

2. Dispositif de liaison selon la revendication 1, caractérisé en ce que la plaque de verrouillage (6) est sensiblement circulaire et comporte sur une partie de sa circonférence un bras de levier (11) qui est en une pièce avec elle, qui est orienté de manière à s'éloigner de l'axe de rotation (10) et qui est destiné à l'actionnement de cette plaque de verrouillage pour la faire tourner.

3. Dispositif de liaison selon la revendication 2, caractérisé en ce que le bras de levier (11) de la plaque de verrouillage (6) comporte une manette (13) saillante vers le bas et en ce que la plaque d'huisserie (5) comporte un évidement en arc de cercle, en forme de fente (19), par laquelle la manette (13) du bras de levier (11) de la plaque de verrouillage passe librement vers le bas et dont les extrémités forment des butées de fin de course (19a, 19b) pour cette manette, de manière à déterminer d'une part la position de libération et d'autre part la position de blocage de la plaque de verrouillage.

4. Dispositif de liaison selon la revendication 3, caractérisé en ce qu'une plaque de recouvrement (20) de préférence en arc de cercle, se fixant sur le côté inférieur du plateau (1) et prévue au-dessus de la plaque de verrouillage (6) recouvre l'évidement en forme de fente (19) de la plaque d'huisserie (5) à la manière d'un cache et comporte sur le côté inférieur tourné vers la plaque de verrouillage (6) des protubérances de guidage (20a) contre lesquelles le côté supérieur de la plaque obturatrice de fixation prend appui.

5. Dispositif de liaison selon la revendication 1, caractérisé en ce que l'axe de rotation de la plaque de verrouillage (6) est formé d'un pivot (10) qui est fixé dans la plaque d'huisserie (5) et qui passe dans un trou central de montage (17) de la plaque de verrouillage.

6. Dispositif de liaison selon la revendication 1, caractérisé en ce que les ouvertures de logement (14) de la plaque de verrouillage (6) ont une première partie élargie d'ouverture (14a) adaptée au diamètre (D) de la tête (7a) des tenons de fixation et une seconde partie plus étroite (14b) et en ce que cette seconde partie d'ouverture (14b) est conformée en fente en arc de cercle centrée sur l'axe de rotation (10) et ayant une largeur (W) sensiblement constante sur sa longueur et adaptée au diamètre (d) de la partie (7b) du corps des tenons de fixation qui se trouve directement sous leur tête (7a), ces fentes débouchant à leur extrémité ouverte dans la première partie élargie correspondante (14a) de l'ouverture et étant délimités latéralement par des zones de la plaque de verrouillage qui ont la forme de surfaces inclinées (15a, 15b) qui sont ascendantes régulièrement de la première partie correspondante de l'ouverture (14a) jusque dans la région de l'extrémité opposée de la fente, ces surfaces obliques (15a, 15b) délimitant ces secondes parties (14b) des ouvertures passant sous les têtes (7a) des tenons de fixation introduites dans les premières parties (14a) des ouvertures lors de l'actionnement de la plaque de verrouillage (6) pour la faire tourner et la mettre en position de blocage, ces têtes étant ainsi immobilisées.

7. Dispositif de liaison selon la revendication 6, caractérisé en ce que les têtes (7a) de l'extrémité libre des tenons de fixation (7) ont une forme de calotte sphérique et en ce que les parties du corps des tenons de fixation situées immédiatement sous chaque tête comportent une entaille annulaire circonférentielle (7b) en forme de rainure dont la largeur correspond à l'épaisseur de la matière (Md) de la plaque de verrouillage (6) et dont la profondeur est dimensionnée de manière que le diamètre (d) des tenons de fixation qui est réduit dans la région de cette entaille en forme de rainure soit adapté à la largeur (W) de la fente de la seconde partie (14b) de l'ouverture de la plaque de verrouillage, les têtes (7a) et la partie restante (7c) du corps de chaque tenon de fixation (7) ayant un diamètre égal (D) et les trous de traversée (9) prévus dans la plaque d'huisserie (5) ayant une dimension adaptée à ce diamètre.

8. Dispositif de liaison selon la revendication 7, caractérisé en ce que la distance sur laquelle le bord inférieur de la tête (7a) des tenons de fixation dépasse vers le haut du côté supérieur du premier élément de liaison (3) correspond à l'épaisseur totale de la plaque d'huisserie et de la plaque de verrouillage (5, 6) qui sont reliées l'une à l'autre.

9. Dispositif de liaison selon la revendication 1, les pieds de la table ayant la forme de profilés creux de section sensiblement rectangulaire, de préférence d'un tel profilé métallique, caractérisé en ce que le premier élément de liaison (3) comprend une pièce destinée à être encastrée (8), se fixant de préférence à ajustement serré dans l'extrémité supérieure du pied (2a) et comportant un bord supérieur (8a) formant un épaulement dont l'élargissement qu'il constitue correspond de préférence à l'épaisseur de la matière du profilé du pied et qui est destiné à l'appui sur le bord supérieur profilé du pied de la table, cette pièce destinée à être encastrée comportant des trous verticaux (8b) dans lesquels se logent fixement les tenons de fixation (7).

10. Dispositif de liaison selon la revendication 1, caractérisé en ce que quatre tenons de fixation (7) sont répartis régulièrement aux quatre angles d'un carré imaginaire et sont fixés au premier élément de liaison (3) et en ce que quatre trous de traversée (9) répartis suivant un carré correspondant sont prévus dans la plaque d'huisserie (5) et quatre ouvertures de logement (14) sont prévues de manière correspondante dans la plaque de verrouillage (6), au moins deux trous de traversée (9)/ouvertures de logement (14) appartenant deux à deux à un côté du carré étant situés à proximité de et parallèlement à un bord du plateau de la table (1).

11. Dispositif de liaison selon la revendication 1, caractérisé en ce que le second élément de liaison (4, 4') est disposé dans l'angle (1a) du plateau (1, 1') de la table, en ce que deux trous de traversée (9)/ouvertures de logement (14) appartenant à un côté du carré sont affectés à l'un des bords (1d) de la région d'un angle du plateau de la table et une seconde paire de trous correspondants de traversée (9)/ouvertures de logement (14) appartenant à un second côté voisin perpendiculaire du carré est affectée au bord voisin contigu perpendiculaire (1e) de la région de l'angle du plateau.

12. Dispositif de liaison selon la revendication 11, au moins deux plateaux, (1, 1') butant bord à bord par leurs côtés se faisant face étant assemblables en une table avec des pieds (2) disposés sous leurs angles, caractérisé en ce qu'un second élément de liaison (4, 4') est fixé sur le côté inférieur (1b, 1'b) de chaque angle des plateaux (1, 1') de manière que la paire de trous de traversée (9)/ouvertures de logement (14) du second élément de liaison (4) du premier plateau (1) soit à une distance médiane (MA) de la paire opposée de trous de traversée/ouvertures de logement du second élément de liaison (4') de l'autre plateau voisin (1') qui correspond exactement à la distance médiane (MS) de deux tenons voisins de fixation (7) du premier élément de liaison (3) d'un pied (2) de manière que deux tenons de fixation (7) du premier élément de liaison (3) d'un seul et même pied (2) se fixent de manière amovible dans le second élément de liaison (4) de l'angle du premier plateau (1) et que les deux autres tenons de fixation (7) de ce premier élément de liaison se fixent de manière amovible dans le second élément de liaison (4') à l'angle de l'autre plateau de table (1').
